(19) Europäisches Patentamt
European Patent Office
Office européen des brevets

(11) Veröffentlichungsnummer: **0 008 063**
**B1**

(12) **EUROPÄISCHE PATENTSCHRIFT**

(45) Veröffentlichungstag der Patentschrift: **09.06.82**

(21) Anmeldenummer: **79102723.8**

(22) Anmeldetag: **31.07.79**

(51) Int. Cl.³: **C 09 B 1/20,** C 09 B 55/00, C 08 K 5/29

(54) **Azomethinderivate von Anthrachinonen, Verfahren zu deren Herstellung; deren Verwendung zum Pigmentieren organischer makromolekularer Stoffe und die so erhaltenen Materialien.**

(30) Priorität: **10.08.78 DE 2835067**

(43) Veröffentlichungstag der Anmeldung: **20.02.80 Patentblatt 80/4**

(45) Bekanntmachung des Hinweises auf die Patenterteilung: **09.06.82 Patentblatt 82/23**

(84) Benannte Vertragsstaaten: **BE CH DE FR GB IT**

(56) Entgegenhaltungen:
DE - A - 2 025 429

CHEMICAL ABSTRACTS, Vol. 86, 1977, Seite 73, Nr. 107999k Columbus, Ohio, U.S.A.

(73) Patentinhaber: **BAYER AG**
**Zentralbereich Patente, Marken und Lizenzen**
**D-5090 Leverkusen 1, Bayerwerk (DE)**

(72) Erfinder: **Neeff, Rütger, Dr.**
**Berta-von-Suttner-Strasse 22**
**D-5090 Leverkusen 1 (DE)**
Erfinder: **Rolf, Meinhard, Dr.**
**Berta-von-Suttner-Strasse 24**
**D-5090 Leverkusen 1 (DE)**
Erfinder: **Müller, Walter, Ing.-grad.**
**Pfarrer-Klein-Strasse 3**
**D-5090 Leverkusen 3 (DE)**

**EP 0 008 063 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Azomethinderivate von Anthrachinonen, Verfahren zu deren Herstellung; deren Verwendung zum Pigmentieren organischer makromolekularer Stoffe und die so erhaltenen Materialien

Die Erfindung betrifft Anthrachinon-Derivate, die in einer ihrer tautomeren Strukturen der Formel

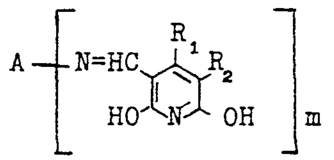 (I)

entsprechen, Verfahren zu ihrer Herstellung sowie ihre Verwendung als Pigmente.

Weitere tautomeren Formen der erfindungsgemäßen Verbindungen entsprechen den Formel

(Ia) 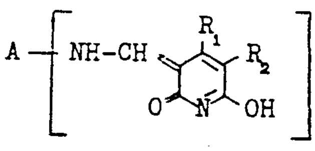 und 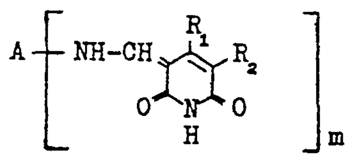 (Ib)

In der Formel I bedeuten:

A einen von Sulfonsäuregruppen freien, gegebenenfalls weitersubstituierten Anthrachinonrest, der vorzugsweise aus höchstens 5 kondensierten Ringen besteht,

m eine Zahl von 1—4, vorzugsweise 1 oder 2,

$R_1$ Wasserstoff oder eine $C_1$—$C_4$-Alkylgruppe

$R_2$ eine Cyangruppe, einen Rest der Formel

—$COOR_3$ (II) oder 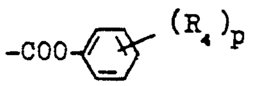 (III)

oder einen Rest der Formel

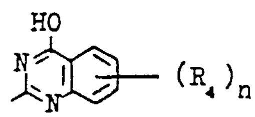 (IV)

worin

$R_3$ Wasserstoff, eine grad- oder verzweigtkettige Alkylgruppe oder einen Cycloalkylrest,

$R_4$ einen Substituenten,

n 0, 1, 2, 3 oder 4 und

p 0, 1, 2, 3, 4 oder 5 bedeuten.

Geeignete Substituenten $R_4$ sind beispielsweise Halogen wie Chlor und Brom, $C_1$—$C_4$-Alkyl, $C_1$—$C_4$-Alkoxy, Nitro, Trifluormethyl, Cyan, gegebenenfalls substituiertes Carbamoyl und Sulfamoyl, Acylamino oder Arylamino.

Als Substituenten der Carbamoyl- und Sulfamoylgruppen kommen vorzugsweise $C_1$—$C_4$-Alkyl-gegebenenfalls durch $C_1$—$C_4$-Alkyl, $C_1$—$C_4$-Alkoxy, Fluor, Chlor, Brom oder Nitro substituiertes Phenyl und Benzyl infrage. Als Acylgruppen sind insbesondere ($C_1$—$C_4$-Alkyl)carbonyl und gegebenenfalls im Benzolkern durch ($C_1$—$C_4$-Alkyl-)chlor, $C_1$—$C_4$-Alkoxy oder Nitro substituiertes Benzoyl zu nennen. Arylamino ist insbesondere gegebenenfalls durch $C_1$—$C_4$-Alkyl, $C_1$—$C_4$-Alkoxy, Fluor, Chlor, Brom oder Nitro substituiertes Phenylamino.

Zur Herstellung der Anthrachinon-Derivate (I) finden wie später noch gezeigt wird, Amino-anthrachinone der Formel

$$A{-}(NH_2)_m \qquad (V)$$

in der A und m die oben angegebene Bedeutung besitzen, Verwendung.

Geeignete Amino-anthrachinone der Formel (V) sind z.B.:

1 - Amino - anthrachinon, 2 - Amino - anthrachinon, 1 - Amino - 2 - chlor - anthrachinon, 1 - Amino - 4-chloranthrachinon, 1 - Amino - 5 - chloranthrachinon, 1 - Amino - 6 - chloranthrachinon, 1 - Amino-6 - (7) - chloranthrachinon (Gemisch), 1 - Amino - 5,8 - dichloranthrachinon, 1 - Amino - 2 - bromanthrachinon, 1 - Amino - 2,4 - dibromanthrachinon, 1 - Amino - 6,7 - dichloranthrachinon, 1 - Amino - 6-fluoranthrachinon, 1 - Amino - 7 - fluoranthrachinon, 1 - Amino - 6,7 - difluoranthrachinon, 2 - Amino-1 - chloranthrachinon, 2 - Amino - 3 - chloranthrachinon, 2 - Amino - 3 - bromanthrachinon, 1 - Amino-4 - nitroanthrachinon, 1 - Amino - 5 - nitroanthrachinon, 1 - Amino - 2 - methylanthrachinon, 1 - Amino - 2 - methyl - 4 - chloranthrachinon, 1 - Amino - 2 - methyl - 4 - bromanthrachinon,

1 - Aminoanthrachinon - 2 - carbonsäure, 1 - Aminoanthrachinon - 2 - carbonsäureamid, 1 - Aminoanthrachinon - 2 - carbonsäuremethylester, 1 - Amino - 4 - nitroanthrachinon - 2 - carbonsäure, 1 - Amino - 2 - acetylanthrachinon, 1 - Amino - 5 - benzoylaminoanthrachinon, 1- Amino - 4 - benzoylaminoanthrachinon, 1 - Amino - 4 - hydroxyanthrachinon, 1 - Amino - 5 - hydroxyanthrachinon, 1 - Amino - 4 - methoxyanthrachinon, 1 - Amino - 2 - methoxy - 4 - hydroxyanthrachinon, 1 - Amino-4 - methylaminoanthrachinon, 1 - Amino - 4 - cyclohexylaminoanthrachinon, 1 - Amino - 4 - anilinoanthrachinon, 1 - Amino - 6 - methylmercaptoanthrachinon, 2 - Phenyl - 6 - amino - 4,5 - phthaloylbenzimidazol, 6 - Chlor - 2 - amino - 3,4 - phthaloylacridon, 7 - Chlor - 2 - amino - 3,4 - phthaloylacridon, 5 - Chlor - 8 - amino - 3,4 - phthaloylacridon, 3 - Methyl - 6 - amino - anthrapyridon, 3 - Methyl - 7 - amino - anthrapyridon, 4 - Amino - 1,9 - pyrazolanthron, 5 - Amino - 1,9 - pyrazolanthron, 4 - Amino - 1,9 - anthrapyrimidin, 5 - Amino - 1,9 - anthrapyrimidin, 1,5 - Diaminoanthrachinon, 1,4 - Diaminoanthrachinon, 1,8 - Diaminoanthrachinon, 2,6-Diaminoanthrachinon, 1,5-Diamino - 4 - chloranthrachinon, 1,4-Diamino - 5 - nitroanthrachinon, 1,5-Diamino-2,4,6,8 - tetrabromanthrachinon, 1,5 - Diamino - 4,8 - dihydroxyanthrachinon, 1,8 - Diamino - 4,5 - dihydroxyanthrachinon, 4,4′ - Diamino - 1,1′ - dianthrimid, 1 - Amino - 8 - benzoylaminoanthrachinon und 1 - Amino-2 - brom - 4 - (4 - methylphenylsulfonylamino) - anthrachinon.

Bevorzugte Anthrachinon-Derivate entsprechen in einer ihrer tautomeren Strukturen der Formel

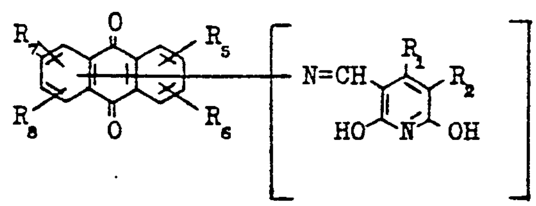

(VI)

worin

$R_1$, $R_2$ und m die oben angegebene Bedeutung haben und

$R_5$ Wasserstoff, Halogen wie Fluor, Chlor und Brom, Nitro, $C_1$—$C_4$-Alkyl, $C_1$—$C_4$-Alkoxy, $C_1$—$C_4$-Alkylamino, Benzylamino, Cyclohexylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkyl-)-carbonyl, ($C_1$—$C_4$-Alkoxy-)carbonyl, gegebenenfalls durch $C_1$—$C_4$-Alkyl, $C_1$—$C_4$-Alkoxy, Chlor oder Nitro substituiertes Phenylamino, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom oder Nitro substituiert sein kann, Carboxy, Hydroxy, ($C_1$—$C_4$-Alkyl-)-carbonylamino oder gegebenenfalls durch $C_1$—$C_4$-Alkyl, $C_1$—$C_4$-Alkoxy, Chlor, Brom oder Nitro substituiertes Benzoylamino, $C_1$—$C_4$-Alkyl, $C_1$—$C_4$-Alkoxy, Fluor, Chlor, Brom oder Nitro substituiertes Phenylsulfonylamino,

$R_6$ Wasserstoff, Chlor oder Hydroxy,

$R_7$ Wasserstoff, Halogen wie Fluor, Chlor oder Brom, Nitro, $C_1$—$C_4$-Alkyl, $C_1$—$C_4$-Alkoxy, $C_1$—$C_4$-Alkylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkoxy-)carbonyl, ($C_1$—$C_4$-Alkyl-)-carbonyl, Benzylamino, Cyclohexylamino, gegebenenfalls durch $C_1$—$C_4$-Alkyl, $C_1$—$C_4$-Alkoxy, Chlor, Brom oder Nitro substituiertes Phenylamino, Carboxy, Hydroxy, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom oder Nitro substituiert sein kann, ($C_1$—$C_4$-Alkyl-)-carbonylamino, gegebenenfalls durch $C_1$—$C_4$-Alkyl, $C_1$—$C_4$-Alkoxy, Chlor, Brom oder Nitro substituiertes Benzoylamino, $C_1$—$C_4$-Alkylsulfonylamino oder gegebenenfalls durch $C_1$—$C_4$-Alkyl, $C_1$—$C_4$-Alkoxy, Fluor, Chlor, Brom oder Nitro substituiertes Phenylsulfonylamino und

$R_8$ Wasserstoff, Halogen wie Fluor, Chlor und Brom oder Hydroxy bedeuten.

Besonders bevorzugt sind Anthrachinon-Derivate, die in einer ihrer tautomeren Strukturen der Formel

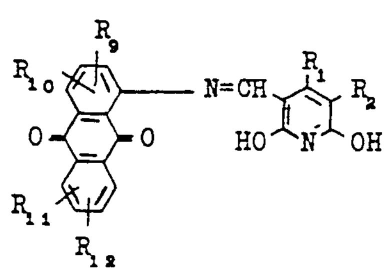

(VII)

entsprechen, worin

$R_1$ und $R_2$ die oben angegebene Bedeutung haben und

$R_9$, $R_{10}$, $R_{11}$ und $R_{12}$ Wasserstoff, Chlor, Brom, Carboxy, $C_1$—$C_4$-Alkoxycarbonyl, Carbamoyl, ($C_1$—$C_4$-Alkyl-)carbonylamino, gegebenenfalls durch 1 oder 2 Nitro oder 1 bis 5 Chlor oder Brom substi-

tuiertes Benzoylamino, $C_1$—$C_4$-Alkylsulfonylamino oder gegebenenfalls durch Methyl, Methoxy oder Chlor substituiertes Phenylsulfonylamino oder einen Rest der Formel

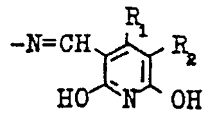

(VIII)

bedeuten.

Die Herstellung der Anthrachinon- Derivate (I) aus den Aminoanthrachinonen der Formel

$$A{-}(NH_2)_m \qquad (V)$$

und den in 3- und 4-Stellung entsprechend substituierten 2.6-Dihydroxy-pyridinen der Formel

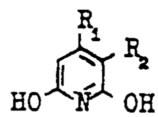

(IX)

in der $R_1$ und $R_2$ die oben angegebene Bedeutung haben, kann nach mehreren Verfahren erfolgen.

(1) Man kondensiert die in 3- und 4-Stellung entsprechend substituierten 2.6-Dihydroxy-pyridine der Formel (IX) in einem gegen die Reaktionspartner inerten organischen Lösungsmittel bei 100—220°C mit einem Orthoameisensäure-trialkylester der Formel

$$HC(OR)_3 \qquad (X)$$

in der R vorzugsweise für eine $C_1$—$C_4$-Alkylgruppe steht, und setzt anschließend die erhaltenen in 3- und 4-Stellung entsprechend substituierten 2-Hydroxy-5-alkoxymethylen-6-oxo-5.6-dihydro-pyridine

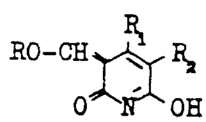

(XI)

in der $R_1$ und $R_2$ die oben angegebene Bedeutung besitzen, in dem gleichen oder einem anderen organischen Reaktionsmedium bei 100—220°C, vorzugsweise 120—180°C, mit einem Amino-anthrachinon der Formel $A{-}(NH_2)_m$ (V) um.

(2) Man kondensiert die Amino-anthrachinone der Formel

$$A{-}(NH_2)_m \qquad (V)$$

in einem gegen die Reaktionspartner inerten organischen Lösungsmittel bei 100—220°C, vorzugsweise 120—180°C, mit einem Orthoameisensäuretrialkylester der oben genannten Formel (X) und setzt anschließend die erhaltenen Formiminoester der Formel

$$A{-}(N{=}CH{-}OR)_m \qquad (XII)$$

in der R vorzugsweise für eine $C_1$—$C_4$-Alkylgruppe steht, und m die oben angegebene Bedeutung hat in dem gleichen oder einem anderen organischen Reaktionsmedium bei 100—220°C, vorzugsweise 120—180°C, mit in 3- und 4-Stellung entsprechend substituierten 2.6-Dihydroxy-pyridinen der oben genannten Formel (IX) um.

Als organische Lösungsmittel eignen sich für die Verfahren (1) und (2) aromatische und heteroaromatische Verbindungen wie Toluol, Chlorbenzol, Pyridin, o-Dichlorbenzol, 1.2.4-Trichlorbenzol, Nitrobenzol, Alkohole wie Butanol, Diethylenglykolmonomethylether, Ether wie Ethylenglykol-dimethylether oder -diethylether, oder dipolar aprotische Lösungsmittel wie Dimethylformamid, Dimethylacetamid, N-Methyl-pyrrolidon, Tetramethylharnstoff, Dimethylsulfoxid oder Tetramethylensulfon.

(3) In einem weiteren Verfahren überführt man die Aminoanthrachinone der Formel

$$A{-}(NH_2)_m \qquad (V)$$

bei 40—100°C, vorzugsweise 40—80°C, in einem gegen die Reaktionspartner inerten organischen Lösungsmittel mit einem Dialkylformamid und einem Thionylhalogenid, insbesondere Thionylchlorid, in die entsprechenden Formamidinium-halogenide der Formel

$$A-[NH-CH=\overset{+}{N}(R)_2]_m(X^-)_m \qquad \text{(XIII)}$$

worin R vorzugsweise für eine $C_1$—$C_4$-Alkylgruppe X für Chlor oder Brom steht und m die oben angegebene Bedeutung hat und kondensiert die erhaltenen Formamidinium-halogenide (XIII) in dem gleichen oder einem anderen organischen Lösungsmittel bei 100—220°C, vorzugsweise 120—180°C, in Gegenwart eines säurebindenden Mittels mit in 3- und 4-Stellung entsprechend substituierten 2.6-Dihydroxy-pyridinen der oben genannten Formel (IX).

Als organische Lösungsmittel für das Verfahren (3) eignen sich insbesondere aromatische Kohlenwasserstoffe wie Toluol, Chlorbenzol, o-Dichlorbenzol, 1,2,4-Trichlorbenzol, Nitrobenzol, Ether wie Ethylenglykol-dimethylether oder -diethylether oder dipolar aprotische Lösungsmittel wie Dimethylformamid, Diethylformamid, N-Methylpyrrolidon, Dimethylsulfoxid oder Tetramethylensulfon.

Als Dialkylformamide verwendet man vorzugsweise niedere Dialkylformamide wie Dimethyl- oder Diethylformamide, kann aber auch cyclische Alkyl-carbonsäureamide wie N-Methylpyrrolidon einsetzen.

Als säurebindende Mittel verwendet man in dem Verfahren (3) Alkali- oder Erdalkalimetallhydroxide oder -carbonate oder Alkali- oder Erdalkalimetallsalze aliphatischer Carbonsäuren, vorzugsweise Natrium- oder Kalium-carbonat, -hydrogencarbonat oder -acetat.

Die Verbindungen der Formel I fallen in einer für die Pigmentanwendung geeigneten Form an oder können durch an sich bekannte Nachbehandlungsverfahren in die geeignete Form übergeführt werden, z.B. durch Lösen oder Quellen in starken anorganischen Säuren wie Schwefelsäure und Austragen auf Eis. Die Feinverteilung kann auch durch Mahlen mit oder ohne Mahlhilfsstoffe wie anorganische Salze oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigmentes können durch Variation der Nachbehandlung beeinflußt werden.

Die Farbstoffe der Formel (I) eignen sich aufgrund ihrer Licht- und Migrationsechtheit für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z.B. solche mit anorganischen Weißpigmenten wie Titandioxid (Rutil) oder mit Zement verstanden werden. Zubereitungen sind z.B. Flushpasten mit organischen Flüssigkeiten oder Teige und Feinteige mit Wasser, Dispergiermitteln und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Ueberzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine z.B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die Pigmente der Formel (I) sind weiterhin ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig und in plastischen Massen gut verteilbar.

## Beispiel 1

a) 11 g 97%iges 1-Amino-anthrachinon, 8,5 g Orthomeisensäure-triethylester und 120 g Nitrobenzol werden etwa 3 Stunden bei 140—145°C gerührt, wobei man das entstehende Ethanol über eine Brücke abdestilliert und die Bildung des Formiminoesters der Formel

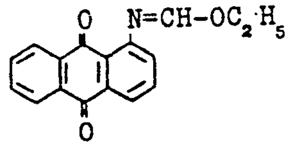 (XIV)

dünnschichtchromatographisch verfolgt. Nach Verschwinden des 1-Amino-anthrachinons versetzt man das Reaktionsgemisch mit 8,1 g 2.6-Dihydroxy-3-cyan-4-methyl-pyridin und erhitzt noch 2—3 Stunden auf 145—150°C. Darauf läßt man auf 100°C abkühlen, saugt das in gelb-roten Prismen auskristallisierte Pigment ab, wäscht mit heißem Nitrobenzol und Methanol und trocknet bei 100°C. Man erhält so 17,4 g (92% der Theorie) des rotstichig gelben Pigmentes der Formel

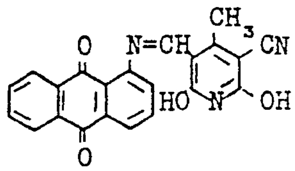

(XV)

$C_{22}H_{13}N_3O_4$ (383)

| | | | | |
|---|---|---|---|---|
| Berechnet: | C 68.93 | H 3.39 | N 10.97 | O 16.71 |
| Gefunden: | C 68.8 | H 3.45 | N 11.01 | O 16.9 |

Das Pigment kann auch in den folgenden tautomeren Strukturen vorliegen:

(XVa) 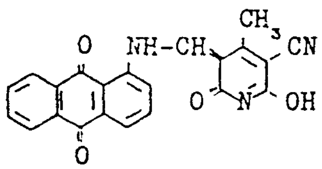

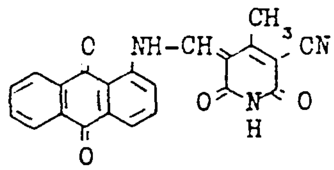 (XVb)

b) 11 g 97%iges 1-Amino-anthrachinon, 4 g Dimethylformamid und 90 g Nitrobenzol werden bei 50—60°C in 1 Stunde mit 7,3 g Thionylchlorid versetzt und bis zur Bildung des Formamidinium-chlorids der Formel

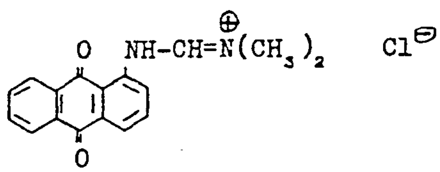

(XVI)

noch etwa 1 Stunde gerührt. Zur Entfernung des überschüssigen Thionylchlorids rührt man noch 1 Stunde im Vakuum nach und versetzt dann das Reaktionsgemisch nacheinander mit 8,1 g 2.6-Dihydroxy-3-cyan-4-methylpyridin und 12,5 g wasserfreiem Natriumacetat und erhitzt in etwa 1 Stunde auf 150—160°C. Man rührt bis zur Beendigung der Bildung des in gelb-roten Prismen kristallisierten Pigmentes bei 150—160°C, saugt dann bei 100°C ab, wäscht mit heißem Nitrobenzol und mit Methanol und Wasser und erhält nach dem Trocknen 15,3 g (89% der Theorie) des mit dem aus Beispiel 1a identischen rotstichig gelben Pigmentes.

Unter Verwendung der in der folgenden Tabelle aufgeführten entsprechend in 3- und 4-Stellung substituierten 2.6-Dihydroxy-pyridine der Formel (IX)

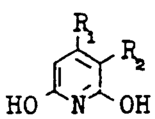

(IX)

erhält man bei Einsatz von 1-Amino-anthrachinon nach den in Beispiel 1a oder 1b beschriebenen Verfahren der Formel (XV) entsprechende Anthrachinon-Pigmente der angegebenen Farbtöne:

TABELLE 1

| Beispiel | $R_1$ | $R_2$ | Farbton |
|---|---|---|---|
| 2 | H | CN | rotstichig Gelb |
| 3 | $C_2H_5$ | CN | rotstichig Gelb |
| 4 | $i\text{-}C_3H_7$ | CN | rotstichig Gelb |
| 5 | $n\text{-}C_4H_9$ | CN | rotstichig Gelb |
| 6 | $CH_3$ | $COOCH_3$ | Gelb |
| 7 | $CH_3$ | $COO{-}CH_2{-}CH_2{-}OCH_3$ | Gelb |
| 8 | $CH_3$ | 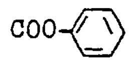 | Gelb |
| 9 | $CH_3$ | 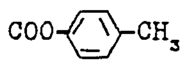 | Gelb |
| 10 | $CH_3$ | 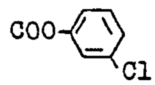 | Gelb |
| 11 | $CH_3$ | 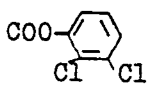 | Gelb |
| 12 | $CH_3$ | 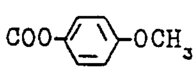 | Gelb |

Beispiel 13

5,5 g 97%iges 1-Amino-anthrachinon, 4,25 g Orthoameisensäuretriethylester und 75 g Nitrobenzol werden etwa 2—3 Stunden auf 140—150°C erhitzt, wobei man das entstehende Ethanol über eine Brücke abdestilliert. Nach Verschwinden des Ausgangsmaterials trägt man 7 g der Verbindung der Formel

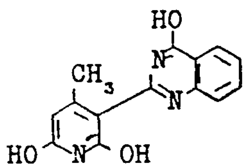

(XVII)

ein und erhitzt weitere 4—5 Stunden auf 145—150°C. Nach Abkühlen auf 100°C saugt man das in roten Prismen kristallisierte Pigment ab, wäscht mit heißem Nitrobenzol und Methanol und erhält nach dem Trocknen bei 100°C 11,44 g (92% der Theorie) des roten Pigmentes der Formel

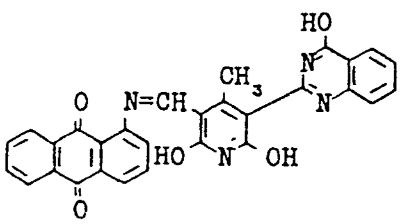

(XVIII)

| | |
|---|---|
| Berechnet: | N 11,11 |
| Gefunden: | N 11,28 |

Rote Pigmente mit ähnlichen Eigenschaften erhält man, wenn man anstelle des oben genannten 2.6-Dihydroxy-3-(4-hydroxychinazolinonyl-2)-4-methyl-pyridins Derivate der folgenden Formeln einsetzt:

TABELLE 2

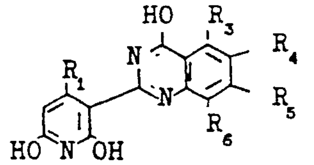

| Formel | $R_1$ | $R_3$ | $R_4$ | $R_5$ | $R_6$ |
|---|---|---|---|---|---|
| XIX | H | H | H | H | H |
| XX | $CH_3$ | H | $CH_3$ | H | H |
| XXI | $CH_3$ | Br | H | H | H |
| XXII | $CH_3$ | Cl | H | H | H |
| XXIII | $CH_3$ | H | Cl | H | H |
| XXIV | $C_2H_5$ | H | H | Cl | H |
| XXV | $CH_3$ | H | Cl | H | Cl |
| XXVI | $CH_3$ | H | $NO_2$ | H | H |
| XXVII | $CH_3$ | H | H | $NO_2$ | H |
| XXVIII | $CH_3$ | H | $NHCOCH_3$ | H | H |
| XXIX | $CH_3$ | H | H | $NHCOCH_3$ | H |

Pigmente mit ausgezeichneten Eigenschaften und ähnlichen Farbtönen erhält man, wenn man in den Beispielen 1—13 anstelle des dort verwandten 1-Amino-anthrachinons folgende 1-Amino-anthrachinon-Derivate einsetzt: 1-Amino-4-chlor-anthrachinon, 1-Amino-5-chlor-anthrachinon, 1-Amino-6(7)-chlor-anthrachinon, 1-Amino-6.7-dichlor-anthrachinon, 1-Amino-2.4-dibrom-anthrachinon, 1-Amino-6-fluoranthrachinon, 1-Amino-4-nitro-anthrachinon, 1-Amino-5-nitro-anthrachinon, 1-Amino-anthrachinon-2-carbonsäure-amid, 1-Amino-2-acetyl-anthrachinon.

Beispiel 14

9,8 g 87%iges 1-Amino-5-benzoylamino-anthrachinon, 4,4 g Orthoameisensäuretriethylester werden in 75 g Nitrobenzol etwa 2—3 Stunden auf 140—150°C erhitzt, wobei man das entstehende Ethanol über eine kurze Brücke abdestilliert. Nach Verschwinden des Ausgangsmaterials trägt man 4,1 g 2.6-Dihydroxy-3-cyan-4-methyl-pyridin ein und erhitzt weitere 4 Stunden auf 145—150°C. Nach Abkühlen auf 100°C saugt man das in gelbstichig roten Nadeln kristallisierte Pigment ab, wäscht mit heißem Nitrobenzol und Methanol und erhält nach dem Trocknen bei 100°C 11,14 g (89% der Theorie) des gelbstichig roten Pigmentes der Formel

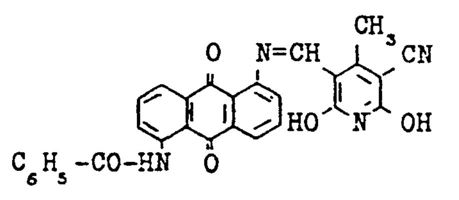

(XXX)

Berechnet: N 11,16
Gefunden: N 11,32

Mit dem gleichen Erfolg kann in dem Beispiel anstelle des Orthoameisensäuretriethylesters der Orthoameisensäuretrimethylester eingesetzt werden.

Mit ähnlichen Ausbeuten erhält man das Pigment, wenn man anstelle des Nitrobenzols folgende Lösungsmittel verwendet: o-Dichlorbenzol, 1.2.4-Trichlorbenzol, Diethylenglykolmonoethylether, Diethylenglykoldimethylether, Dimethylformamid, N-Methylpyrrolidon, Dimethylsulfoxid und Tetramethylensulfon.

Beispiel 15

8,5 g 95%iges 1-Amino-4-benzoylamino-anthrachinon, 4,4 g Orthoameisensäuretriethylester werden in 100 g o-Dichlorbenzol etwa 2—3 Stunden auf 140—150°C erhitzt, wobei man das entstehende Ethanol über eine kurze Brücke abdestilliert. Nach Verschwinden des Ausgangsmaterials trägt man 4,1 g 2.6-Dihydroxy-3-cyan-4-methyl-pyridin ein und erhitzt weitere 4 Stunden auf 140—150°C. Nach Abkühlen auf 100°C saugt man das in schönen braun-roten Nadeln kristallisierte Pigment ab, wäscht mit heißem o-Dichlorbenzol und Methanol und erhält nach dem Trocknen bei 100°C 11,1 g (93,7% der Theorie) des dunkelroten Pigmentes der Formel

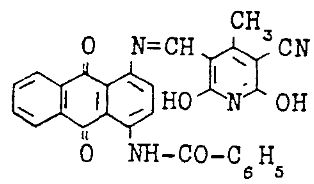

(XXXI)

Berechnet: N 11,16
Gefunden: N 11,0

Pigmente mit ausgezeichneten Eigenschaften und ähnlichen Farbtönen erhält man, wenn man anstelle des oben genannten 1-Amino-4-benzoylamino-anthrachinons das 1-Amino-4-(4-chlorbenzoylamino)-anthrachinon, das 1-Amino-4-(2.4-dichlorbenzoylamino)-anthrachinon, das 1-Amino-4-(3-nitrobenzoylamino)-anthrachinon oder das 1-Amino-4-(4-acetylaminobenzoylamino)-anthrachinon verwendet.

Beispiel 16

11,8 g 1-Amino-4-hydroxy-anthrachinon, 8,5 g Orthoameisensäuretriethylester und 120 g Nitrobenzol werden etwa 3 Stunden bei 140—145°C gerührt, wobei man das entstehende Ethanol über eine Brücke abdestilliert. Nach Verschwinden des Ausgangsmaterials trägt man 8,1 g 2.6-Dihydroxy-3-cyan-4-methyl-pyridin ein und erhitzt weitere 4 Stunden auf 140—150°C. Nach Abkühlen auf 100°C saugt man das in schönen orange-braunen Nadeln kristallisierte Pigment ab, wäscht mit heißem Nitrobenzol und Methanol und erhält nach dem Trocknen bei 100°C 18 g (91% der Theorie) des dunkelroten Pigmentes der Formel

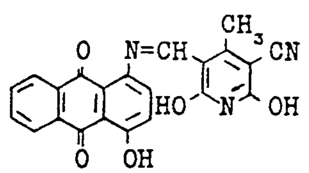

(XXXII)

Berechnet: N 10,53
Gefunden: N 10,72

Beispiel 17

5,5 g 1.5-Diamino-anthrachinon, 8,8 g Orthoameisensäuretriethylester werden in 80 g Nitrobenzol etwa 3 Stunden auf 145—150°C erhitzt, wobei man das entstehende Ethanol über eine Brücke abdestilliert und das Verschwinden des Ausgangsmaterials dünnschichtchromatographisch verfolgt. Man versetzt nun mit 8,1 g 2.6-Dihydroxy-3-cyan-4-methyl-pyridin und erhitzt so lange auf 140—150°C, bis die Pigmentbildung beendet ist, was etwa 4 Stunden erfordert. Man saugt darauf das in dunkelbraunen Prismen kristallisierte Pigment bei 120°C ab, wäscht mit heißem Nitrobenzol und Methanol und erhält nach dem Trocknen bei 100°C 12,7 g (98,5% der Theorie) des rotbraunen Pigmentes der Formel

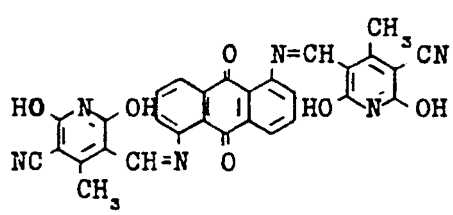

(XXXIII)

Berechnet: N 15,05
Gefunden: N 15,27

Verwendet man anstelle des oben genannten 1.5-Diamino-anthrachinons in Beispiel 17 5,5 g 1.8-Diamino-anthrachinon, so erhält man 12,6 g (97,8% der Theorie) des rotstichig braunen Pigmentes der Formel

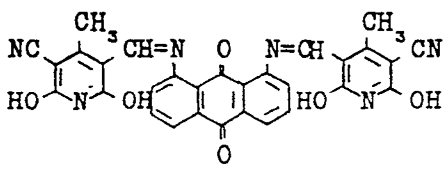

(XXXIV)

Berechnet: N 15,05
Gefunden: N 15,20

Setzt man anstelle des oben genannten 1.5-Diamino-anthrachinons in Beispiel 17 5,5 g 1.4-Diamino-anthrachinon ein, so erhält man 12,7 g (98,5% der Theorie) des schwarzbraunen Pigmentes der Formel

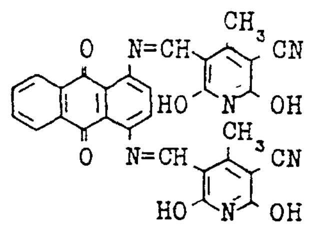

(XXXV)

Berechnet: N 15,05
Gefunden: N 15,30

Beispiel 18

6,25 g 1.5-Diamino-4.8-dihydroxy-anthrachinon, 8,8 g Orthoameisensäuretriethylester werden in 100 g Nitrobenzol etwa 3 Stunden auf 145—150°C erhitzt, wobei man das entstehende Ethanol über eine Brücke abdestilliert und das Verschwinden des Ausgangsmaterials dünnschichtchromatographisch verfolgt. Man versetzt nun mit 8,1 g 2.6-Dihydroxy-3-cyan-4-methyl-pyridin un erhitzt so lange auf 160—170°C, bis die Pigmentbildung beendet ist. Man saugt darauf das in graublauen Prismen kristallisierte Pigment bei 120°C ab, wäscht mit heißem Nitrobenzol und Methanol und erhält nach dem Trocknen bei 100°C 13,3 g (97,3% der Theorie) des blaustichig grauen Pigmentes der Formel

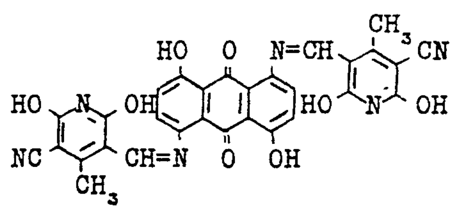

(XXXVI)

Berechnet: N 14,24
Gefunden: N 14,40

Verwendet man in Beispiel 18 anstelle des 1.5-Diamino-4.8-dihydroxy-anthrachinons 6,25 g 1.8-Diamino-4.5-dihydroxy-anthrachinon, so erhält man 12,85 g (94% der Theorie) des grünstichig grauen Pigmentes der Formel

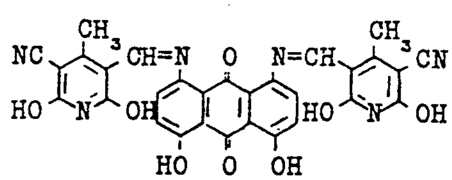

(XXXVII)

Berechnet: N 14,24
Gefunden: N 14,20

Pigmente mit ausgezeichneten Eigenschaften und ähnlichen Farbtönen erhält man, wenn man in Beispiel 18 anstelle des dort verwandten 1.5-Diamino-4.8-dihydroxy-anthrachinons das 1.5-Diamino-4.8-dihydroxy-x-brom-anthrachinon oder das 1.8-Diamino-4.5-dihydroxy-x-brom-anthrachinon einsetzt.

Beispiel 19

3,4 g 1.4.5.8-Tetraamino-anthrachinon, 9 g Orthoameisensäuretriethylester und 125 g Nitrobenzol werden 3—4 Stunden auf 145—150°C erhitzt, wobei man das entstehende Ethanol über eine Brücke abdestilliert und das Verschwinden des Ausgangsmaterials dünnschichtchromatographisch verfolgt. Man versetzt nun mit 8,4 g 2.6-Dihydroxy-3-cyan-4-methylpyridin und erhitzt so lange auf 175—180°C, bis die Bildung des Pigmentes in blauschwarzen Prismen beendet ist. Man saugt darauf das Pigment bei 120°C ab, wäscht mit heißem Nitrobenzol und Methanol und erhält nach dem Trocknen bei 100°C 10,7 g (93% der Theorie) des blaustichig grauen Pigmentes der Formel

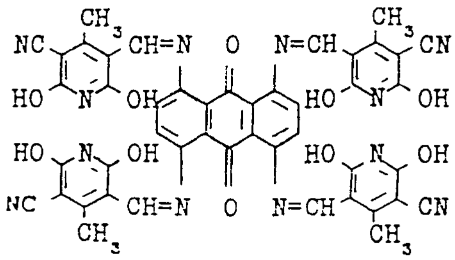

(XXXVIII)

Berechnet: N 18,50
Gefunden: N 18,21

Beispiel 20

13,37 g 1-Amino-4.5.8-trihydroxy-anthrachinon, 8,8 g Orthoameisensäuretriethylester und 80 g Nitrobenzol werden etwa 3 Stunden auf 145—150°C erhitzt, wobei man das entstehende Ethanol über eine Brücke abdestilliert und das Verschwinden des Ausgangsmaterials dünnschichtchromatographisch verfolgt. Man versetzt nun mit 8,1 g 2.6-Dihydroxy-3-cyan-4-methyl-pyridin und erhitzt so lange auf 155—160°C, bis die Bildung des Pigmentes beendet ist. Nach dem Abkühlen auf 110°C saugt man das in braunen Prismen kristallisierte Pigment ab, wäscht mit heißem Nitrobenzol und Methanol und erhält nach dem Trocknen bei 100°C 19 g (84,9% der Theorie) des braunen Pigmentes der Formel

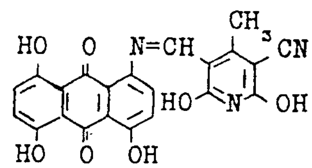

(XXXIX)

Berechnet: N 9,74
Gefunden: N 9,96

Verwendet man in Beispiel 20 anstelle von 1-Amino-4.5.8-trihydroxy-anthrachinon äquivalente Mengen der in Tabelle 3 aufgeführten Amino-anthrachinone, so werden entsprechend Pigmente in den Dort angegebenen Farbtönen erhalten.

TABELLE 3

| Beispiel | Amino-anthrachinon | Farbton des erhaltenen Pigmentes |
|---|---|---|
| 21 | 1-Amino-5.8-dihydroxy-anthrachinon | Violett |
| 22 | 1-Amino-2-brom-4-hydroxy anthrachinon | Rot |
| 23 | 1-Amino-4-anilino-anthrachinon | rotstichig Grau |

Beispiel 24

8,5 g 87%iges 1-Amino-5-benzoylamino-anthrachinon, 4,4 g Orthoameisensäuretriethylester werden in 75 g Nitrobenzol etwa 3 Stunden auf 140—150°C erhitzt, wobei man das entstehende Ethanol über eine Brücke abdestilliert. Nach Verschwinden des Ausgangsmaterials trägt man 7 g der Verbindung der Formel

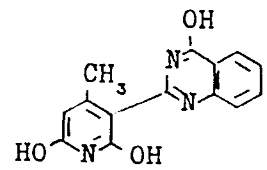

(XVII)

ein unt erhitzt so lange auf 155—160°C, bis die Bildung des Pigmentes in braunroten Nädelchen beendet ist. Nach dem Abkühlen auf 110—120°C saugt man das Pigment ab, wäscht mit heißem Nitrobenzol und Methanol und erhält nach dem Trocknen bei 100°C 12,3 g (91,5% der Theorie) des rotbraunen Pigmentes der Formel

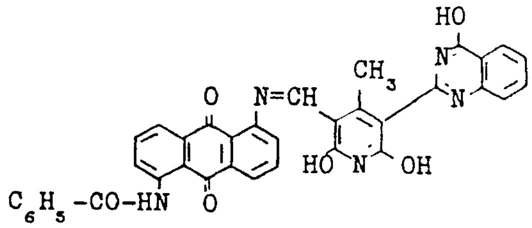

(XL)

Berechnet: N 11,27
Gefunden: N 11,43

Verwendet man in Beispiel 24 anstelle von 1-Amino-5-benzoylamino-anthrachinon äquivalente Mengen der in Tabelle 4 aufgeführten Amino-anthrachinone, so werden entsprechende Pigmente der dort angegebenen Farbtöne erhalten.

TABELLE 4

| Beispiel | Amino-anthrachinon | Farbton des erhaltenen Pigmentes |
|---|---|---|
| 25 | 1-Amino-4-hydroxy-anthrachinon | Violett |
| 26 | 1-Amino-4-benzoylamino-anthrachinon | rotstichig Violett |
| 27 | 1.5-Diamino-anthrachinon | Rot |

Beispiel 28

a) 8 g des nach Beispiel 1a erhaltenen feinverteilten Pigmentes werden mit einem Einbrennlack aus 25 g Kokosölalkydharz (40% Kokosöl), 10 g Melaminharz, 50 g Toluol und 7 g Glykolmonomethylether auf einer automatischen Hoover-Muller-Anreibmaschine angerieben. Man trägt die Mischung auf die zu lackierende Unterlage auf, härtet den Lack durch Einbrennen bei 130°C und erhält rotstichig gelbe Lackierungen sehr guter Ueberlackierechtheit und hervorrangender Licht- und Wetterechtheit.

Pigmentierte Einbrennlacke gleicher Echtheiten erhält man, wenn man 15—25 g des angegebenen Alkydharzes oder eines Alkydharzes auf Basis von Baumvollsaatöl, Ricinenöl, Ricinusöl oder synthetischen Fettsäuren verwendet und statt der angegebenen Melaminharzmenge 10—15 g des erwähnten Melaminharzes oder eines Kondensationsproduktes von Formaldehyd mit Harnstoff oder mit Benzoguanamin einsetzt.

b) Reibt man statt der angegebenen Pigmentmenge 1 bis 10 g einer Mischung von Titandioxid (Rutiltyp) mit dem in Beispiel 28a angegebenen Pigment im Verhältnis 0,5—50:1 in den im Beispiel 28a angegebenen Lack ein, erhält man bei gleicher Weiterverarbeitung Lackierungen gleicher Echtheiten und mit steigendem Titantioxidgehalt nach weiß verschobenem, rotstichig gelbem Farbton.

Beispiel 29

In 100 g eines Nitrocelluloselackes, der aus 44 g Collodiumwolle (niedrigviskos, 35%ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1a eingerieben. Nach Verstreichen und Trocknen erhält man rotstichig gelbe Lackierungen hervorragender Licht- und Ueberlackierechtheit. Zu gleichen Ergebnissen kommt man bei Verwendung von Nitrolacken mit 10—15 g Nitrocellulosegehalt, 5—10 g Weichmachergehalt und 70—85 g Lösungsmittelgemisch unter bevorzugter Verwendung von aliphatischen Estern wie Ethylacetat, Butylacetat und Aromaten wie Toluol und

Xylol und kleineren Anteilen aliphatischer Ether wie Glykolether und Alkohole wie Butanol. Unter Weichmachern können z.B. verstanden werden: Phthalsäureester wie Dioctylphthalat, Dibutylphthalat, Ester der Phosphorsäure, Ricinusöl allein oder in Kombination mit ölmodifizierten Alkydharzen.

Lackierungen mit ähnlichen Echtheitseigenschaften erhält man bei Verwendung von anderen physikalisch trocknenden Sprit-, Zapon- und Nitrolacken, von lufttrocknenden Oel-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 30

5 g in feine Verteilung gebrachtes Pigment gemäß Beispiel 1a werden in 100 g eines paraffinfrei trocknenden ungesättigten Polyesterharzes in einer Porzellankugelmühle angerieben. Mit der Anreibung werden 10 g Styrol, 59% Melamin-Formaldehyd-Harz und 1 g einer Paste aus 40 g Cyclohexanonperoxid und 60% Dibutylphthalat gut verrührt und schließlich 4 g Trocknerlösung (10%iges Kobaltnaphthenat in Testbenzin) und 1 g Siliconöllösung (1%ig in Xylol) beigemischt. Man trägt die Mischung auf grundiertes Holz auf und erhält eine hochglänzende, wasserfeste und wetterechte rotstichig gelbe Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man rotstichig gelbe Lackierungen hervorragender Wetter- und Ausblühechtheit.

Beispiel 31

100 g einer 65%igen Lösung eines aliphatischen Polyesters mit ca. 8% freien Hydroxylgruppen in Glykolmonomethyletheracetat werden mit 5 g des nach Beispiel 1a erhaltenen Pigmentes angerieben und sodann mit 44 g einer 67%igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende rotstichig gelbe Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatischen Isocyanaten und hydroxylgruppenhaltigen Polyethern oder Polyestern, sowie mit feuchtigkeitstrocknenden, Polyharnstofflackierungen ergebenden Polyisocyanatlacken.

Beispiel 32

5 g eines Feinteiges, erhalten durch Kneten von 50 g des nach Beispiel 1a erhaltenen Pigments mit 15 g Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50% Polyvinylacetat, gemischt. Man verstreicht die Farbe und erhält nach Trocknen rotstichig gelbe Anstriche sehr guter Kalk- und Zementechtheit sowie hervorragender Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäuren als Bindemittel enthalten, sowie Dispersions-farben auf Basis von Polyvinylpropionat, Polymethacrylat oder Butadienstyrol.

Beispiel 33

10 g des in Beispiel 32 erwähnten Pigment-Teiges werden mit einer Mischung aus 5 g Kreide und 5 g 20%iger Leimlösung vermischt. Man erhält eine rotstichig gelbe Tapetenstreichfarbe, mit der man Ueberzüge hervorragender Lichtechtheit erzielt. Zur Herstellung des Pigment-Teiges können auch andere nicht ionogene Emulgatoren wie die Umsetzungsprodukte von Nonylphenyol mit Ethylenoxid oder ionogene Netzmittel, wie die Natriumsalze von Alkylarylsulfonsäuren, z.B. der Dinaphthylmethandisulfonsäure, Natriumsalze von substituierten Sulfonsäureestern und Natriumsalze von Paraffinsulfonsäuren in Kombination mit Alkylpolyglykolethern verwendet werden.

Beispiel 34

Eine Mischung aus 65 g Polyvinylchlorid, 35 g Diisooctylphthalat, 2 g Dibutylzinnmercaptid, 0,5 g Titandioxid und 0,5 g des Pigmentes von Beispiel 1a wird auf einem Mischwalzwerk bei 165°C eingefärbt. Man erhält eine intensiv rotstichig gelb gefärbte Masse, die zur Herstellung von Folien oder Formkörpern dienen kann. Die Färbung zeichnet sich durch hervorragende Licht- und sehr gute Weichmacherechtheit aus.

Beispiel 35

0,2 Pigment nach Beispiel 1a werden mit 100 g Polyethylen-, Polypropylen- oder Polystyrolgranulat gemischt. Die Mischung kann entweder bei 220 bis 280°C direkt in einer Spritzgußmaschine verspritzt, oder in einer Strangpresse zu gefärbten Stäben bzw. auf dem Mischwalzwerk zu gefärbten Fellen verarbeiten werden. Die Stäbe bzw. Felle werden gegebenenfalls granuliert und in einer Spritzgußmaschine verspritzt.

Die rotstichig gelben Formlinge besitzen sehr gute Licht- und Migrationsechtheit. In ähnlicher Weise können bei 280—300°C, gegebenenfalls unter Stickstoffatmosphäre, synthetische Polyamide

aus Caprolactam oder Adipinsäure und Hexamethylendiamin oder die Kondensate aus Terephthalsäure und Ethylenglykol gefärbt werden.

Beispiel 36

1 g Pigment nach Beispiel 1a, 10 g Titandioxid (Rutiltyp) und 100 g eines in Pulverform vorliegenden Mischpolymerisates auf Basis von Acrylnitril-Butadien-Styrol werden gemischt und auf einem Walzwerk bei 140—180°C eingefärbt. Man erhält ein rotstichig gelb gefärbtes Fell, das granuliert und in einer Spritzgußmaschine bei 200—250°C verspritzt wird. Man erhält rotstichig gelbe Formlinge sehr guter Licht- und Migrationsechtheit sowie ausgezeichneter Hitzebeständigkeit.

Auf ähnliche Weise, jedoch bei Temperaturen von 180—220°C und ohne Zusatz von Titandioxid werden Kunststoffe auf Basis von Celluloseacetat, Cellulosebutyrat und deren Gemische mit ähnlichen Echtheiten gefärbt.

Beispiel 37

0,2 g Pigment nach Beispiel 1a werden in feinverteilter Form mit 100 g eines Kunststoffes auf Polycarbonat-Basis in einem Extruder oder in einer Knetschnecke bei 250—280°C gemischt und zu Granulat verarbeitet. Man erhält ein rotstichig gelbes, transparentes Granulat hervorragender Lichtechtheit und Hitzebeständigkeit.

Beispiel 38

90 g eines schwach verzweigten Polypropylenglykols mit einem Molekulargewicht von 2500 und einer Hydroxylzahl von 56, 0,25 g Endoethylenpiperazin, 0,3 g Zinn-(II)-octoat, 1,0 g eines Polyethersiloxans, 3,5 g Wasser, 12,0 g einer Anreibung von 10 g Pigment nach Beispiel 1a in 50 g des angegebenen Polypropylenglykols werden gut miteinander gemischt und anschließend mit 45 g Toluylendiisocyanat (80% 2.4- und 20% 2.6-Isomeres) innig gemischt und in eine Form gegossen. Die Mischung trübt sich nach 6 Sekunden und die Schaumstoffbildung erfolgt. Nach 70 Sekunden hat sich ein intensiv rotstichig gelb gefärbter, weicher Polyurethanschaumstoff gebildet, dessen Pigmentierung hervorragende Lichtechtheit aufweist.

Beispiel 39

90 g eines schwach verzweigten Polyesters aus Adipinsäure, Diethylenglykol und Trimethylolpropan mit einem Molekulargewicht von 2000 und einer Hydroxylzahl von 60 werden mit folgenden Komponenten vermischt: 1,2 g Dimethylbenzylamin, 2,5 g Natrium-Ricinusölsulfat, 2,0 g eines oxethylierten, benzylierten Oxidiphenyls, 1,75 g Wasser, 12 g einer Paste, hergestellt durch Anreiben von 10 g des Pigmentes nach Beispiel 1a in 50 g des oben angegebenen Polyesters. Nach der Mischung werden unter Rühren 40 g Toluylendiisocyanat (65% 2,4- und 35% 2,6-Isomeres) eingerührt und die Mischung in eine Form gegossen und verschäumt. Nach 60 Sekunden hat sich rotstichig gelb gefärbter, weicher Polyurethanschaumstoff gebildet, dessen Einfärbung sich durch sehr gute Lichtechtheiten auszeichnet.

Beispiel 40

Mit einer Druckfarbe, hergestellt durch Anreiben von 35 g Pigment nach Beispiel 1a und 65 g Leinöl und Zugabe von 1 g Siccativ (Co-Naphthenat, 50%ig in Testbenzin) werden rotstichig gelbe Offset-Drucke hoher Billanz und Farbstärke und sehr guter Licht- und Lackierechtheit erhalten. Verwendung dieser Druckfarbe in Buch-, Licht-, Stein- oder Stahlstichdruck führt zu rotstichig gelben Drucken ähnlicher Echtheiten. Verwendet man das Pigment zur Färbung von Blechdruck- oder niedrigviskosen Tiefdruckfarben oder Drucktinten, erhält man rotstichig gelbe Drucke ähnlicher Echtheiten.

Beispiel 41

Aus 10 g des in Beispiel 32 angegebenen Pigment-Feinteiges, 100 g Traganth 3%ig, 100 g einer wäßrigen 50%igen Eialbuminlösung und 25 g eines nichtionogenen Netzmittels wird eine Druckpaste bereitet. Man bedruckt ein Textilfasergewebe, dämpft bei 100°C und erhält einen rotstichig gelben Druck, der sich durch vorzügliche Echtheiten, insbesondere Lichtechtheiten auszeichnet. Im Druckansatz können anstelle des Traganths und Eialbumins weitere, für das Fixieren auf der Faser verwendbare Bindemittel, beispielsweise solche auf Kunstharzbasis, Britishgum oder Celluloseglykolat verwendet werden.

Beispiel 42

Eine Mischung aus 100 g Crepe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50°C und mit 2 g des nach Beispiel 1a erhaltenen Pigmentes eingefärbt und dann 12 Minuten bei 140°C vulkanisiert. Man erhält ein rotstichig gelb gefärbtes Vulkanisat sehr guter Lichtechtheit.

Beispiel 43

100 g einer 20%igen wäßrigen Paste des Pigmentes nach Beispiel 1a, beispielsweise hergestellt durch Auflösen des Farbstoffes in 96%iger Schwefelsäure, Austragen auf Eis, Filtrieren und Neutralwaschen mit Wasser, werden 22,5 l einer wäßrigen, ungefähr 9%igen Viskoselösung im Rührwerk zugesetzt. Die gefärbte Masse wird 15 Minuten gerührt, anschließend entlüftet und einem Spinn- und

Entschwefelungsprozeß unterworfen. Man erhält gelbstichig rote Fäden oder Folien mit sehr guter Lichtechtheit.

Beispiel 44

10 kg einer Papiermasse, enthaltend auf 100 g 4 g Cellulose, werden im Holländer während etwa 2 Stunden behandelt. Während dieser Zeit gibt man in je viertelstündigen Abständen 4 g Harzleim, dann 30 g einer etwa 15%igen Pigmentdispersion, erhalten durch Mahlen von 4,8 g des nach Beispiel 1a erhaltenen Pigmentes mit 4,8 g Dinaphthylmethandisulfonsäure und 22 g Wasser in der Kugelmühle, sodann 5 g Aluminiumsulfat zu.

Nach Fertigstellung auf der Papiermaschine erhält man ein rotstichig gelb gefärbtes Papier von hervorragender Lichtechtheit.

Beispiel 45

Das nach Beispiel 44 hergestellte gelb pigmentierte Papier wird mit der 55%igen Lösung eines Harnstoff-Formaldehyd-Harzes in n-Butanol getränkt und bei 140°C eingebrannt. Man erhält ein rotstichig gelbes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 28 angegebenen, gelben Pigmentfeinteig und wasserlösliche bzw. verseifbare Bindemittel enthält.

Beispiel 46

20 g des gemäß Beispiel 1a erhaltenen Pigmentes werden in 50 g Dimethylformamid unter Verwendung eines Dispergierhilfsmittels, bestehend aus 50 g einer 10%igen Lösung von Polyacrylnitril in Dimethylformamid, in einer Perlmühle fein dispergiert. Das so erhaltene Pigmentkonzentrat wird in bekannter Weise zu Spinnlösung von Polyacrylnitril gegeben, homogenisiert und dann zu Filamenten nach bekannten Trocknen- oder Naß-Spinnverfahren versponnen.

Man erhält rotstichig gelb gefärbte Filamente, deren Färbungen sich durch sehr gute Reib-, Wasch-, Migrations-, Hitze-, Licht- und Wetterechtheiten auszeichnen.

**Patentansprüche**

1. Anthrachinon-Derivate, die in einer ihrer tautomeren Strukturen der Formel

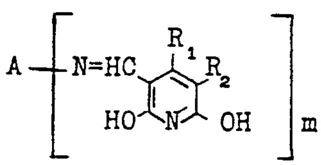

(I)

entsprechen, in der

A einen von Sulfonsäuregruppen freien, gegebenenfalls weitersubstituierten Anthrachinonrest, der vorzugsweise aus höchstens 5 kondensierten Ringen besteht,

m eine Zahl von 1—4, vorzugsweise 1 oder 2,

$R_1$ Wasserstoff oder eine $C_1$—$C_4$-Alkylgruppe

$R_2$ eine Cyangruppe, einen Rest der Formel

—$COOR_3$ (II) oder 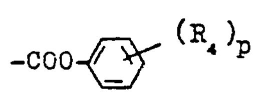 (III)

oder einen Rest der Formel

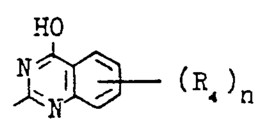

(IV)

bedeuten, worin

$R_3$ Wasserstoff, eine grad- oder verzweigtkettige Alkylgruppe oder einen Cycloalkylrest,

$R_4$ einen Substituenten,

n 0, 1, 2, 3 oder 4 und

p 0, 1, 2, 3, 4 oder 5 bedeuten.

2. Anthrachinon-Derivate, die in einer ihrer tautomeren Strukturen der Formel

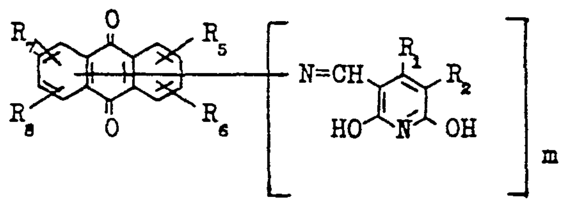

(VI)

entsprechen, worin

$R_1$, $R_2$ und m die in Anspruch 1 angegebene Bedeutung haben und

$R_5$ Wasserstoff, Halogen wie Fluor, Chlor und Brom, Nitro, $C_1$—$C_4$-Alkyl, $C_1$—$C_4$-Alkoxy, $C_1$—$C_4$-Alkylamino, Benzylamino, Cyclohexylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkyl-)carbonyl, ($C_1$—$C_4$-Alkoxy-)carbonyl, gegebenenfalls durch $C_1$—$C_4$-Alkyl, $C_1$—$C_4$-Alkoxy, Chlor oder Nitro substituiertes Phenylamino, gegebenenfalls durch $C_1$—$C_4$-Alkyl, Benzyl oder Phenyl mono- oder disubstituiertes Carbonamid, wobei Phenyl durch $C_1$—$C_4$-Alkyl, $C_1$—$C_4$-Alkoxy, Fluor, Chlor, Brom oder Nitro substituiert sein kann, Carboxy, Hydroxy, $C_1$—$C_4$-Alkylcarbonylamino oder gegebenenfalls durch $C_1$—$C_4$-Alkyl, $C_1$—$C_4$-Alkoxy, Chlor, Brom oder Nitro substituiertes Benzoylamino, $C_1$—$C_4$-Alkyl, $C_1$—$C_4$-Alkoxy, Fluor, Chlor, Brom oder Nitro substituiertes Phenylsulfonylamino,

$R_6$ Wasserstoff, Chlor oder Hydroxy,

$R_7$ Wasserstoff, Halogen wie Fluor, Chlor oder Brom, Nitro, $C_1$—$C_4$-Alkyl, $C_1$—$C_4$-Alkoxy, $C_1$—$C_4$-Alkylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkoxy-)carbonyl, ($C_1$—$C_4$-Alkyl-)-carbonyl, Benzylamino, Cyclohexylamino, gegebenenfalls durch $C_1$—$C_4$-Alkyl, $C_1$—$C_4$-Alkoxy, Chlor, Brom oder Nitro substituiertes Phenylamino, Carboxy, Hydroxy, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom oder Nitro substituiert sein kann, ($C_1$—$C_4$-Alkyl-)-carbonylamino, gegebenenfalls durch $C_1$—$C_4$-Alkyl, $C_1$—$C_4$-Alkoxy, Chlor, Brom oder Nitro substituiertes Benzoylamino, $C_1$—$C_4$-Alkylsulfonylamino oder gegebenenfalls durch $C_1$—$C_4$-Alkyl, $C_1$—$C_4$-Alkoxy, Fluor, Chlor, Brom oder Nitro substituiertes Phenylsulfonylamino und

$R_8$ Wasserstoff, Halogen wie Fluor, Chlor und Brom oder Hydroxy bedeuten.

3. Anthrachinon-Derivate, die in einer ihrer tautomeren Strukturen der Formel

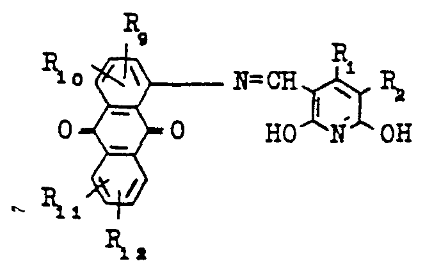

(VII)

entsprechen, worin

$R_1$ und $R_2$ die in Anspruch 1 angegebene Bedeutung haben und

$R_9$, $R_{10}$, $R_{11}$ und $R_{12}$ Wasserstoff, Chlor, Brom, Carboxy, $C_1$—$C_4$-Alkoxycarbonyl, Carbamoyl, ($C_1$—$C_4$-Alkyl-)carbonylamino, gegebenenfalls durch 1 oder 2 Nitro oder 1 bis 5 Chlor oder Brom substituiertes Benzoylamino, $C_1$—$C_4$-Alkylsulfonylamino oder gegebenenfalls durch Methyl, Methoxy oder Chlor substituiertes Phenylsulfonylamino oder einen Rest der Formel

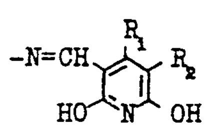

(VIII)

bedeuten.

4. Verfahren zur Herstellung von Anthrachinon-Pigmenten, dadurch gekennzeichnet, daß man Amino-anthrachinone der Formel

$$A\text{-}(NH_2)_m \qquad (V)$$

in der A und m die in Anspruch 1 genannte Bedeutung besitzen, mit 2-Hydroxy-5-alkoxymethylen-6-oxo-5.6-dihydro-pyridinen der Formel

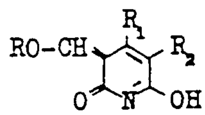

(XI)

in der R vorzugsweise für eine $C_1$—$C_4$-Alkylgruppe steht und $R_1$ und $R_2$ die in Anspruch 1 genannte Bedeutung besitzen, in einem organischen Reaktionsmedium bei 100—220°C, vorzugsweise 120—180°C, kondensiert.

5. Verfahren zur Herstellung von Anthrachinon-Pigmenten, dadurch gekennzeichnet, daß man Formiminoester von Amino-anthrachinonen der Formel

$$A\text{—}(N{=}CH\text{—}OR)_m \qquad (XII)$$

in der A und m die in Anspruch 1 genannte Bedeutung besitzen und R vorzugsweise für eine $C_1$—$C_4$-Alkylgruppe steht mit 2.6-Dihydroxy-pyridinen der Formel

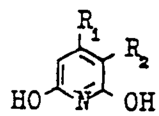

(IX)

in der $R_1$ und $R_2$ die in Anspruch 1 genannte Bedeutung besitzen, in einem organischen Reaktionsmedium bei 100—220°C, vorzugsweise 120—180°C, kondensiert.

6. Verfahren zur Herstellung von Anthrachinon-Pigmenten, dadurch gekennzeichnet, daß man Formamidinium-halogenide der Formel

$$A\text{—}[NH\text{—}CH{=}\overset{\oplus}{N}(R)_2]_m \quad (X^-)_m \qquad (XIII)$$

in der
A und m die in Anspruch 1 genannte Bedeutung besitzen,
R vorzugsweise für eine $C_1$—$C_4$-Alkylgruppe und
X für Chlor oder Brom stehen,
mit 2,6-Dihydroxypyridinen der Formel

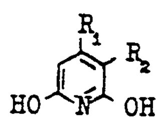

(IX)

in der
$R_1$ und $R_2$ die in Anspruch 1 genannte Bedeutung besitzen,
in einem organischen Lösungsmittel bei 100—220°C, vorzugsweise 120—180°C, in Gegenwart eines säurebindenden Mittels kondensiert.

7. Verfahren zum Pigmentieren organischer makromolekularer Stoffe, dadurch gekennzeichnet, daß man Anthrachinon-Derivate gemäß den Ansprüchen 1 bis 3 verwendet.

**Claims**

1. Anthraquinone derivatives which in one of their tautomeric structures correspond to the formula

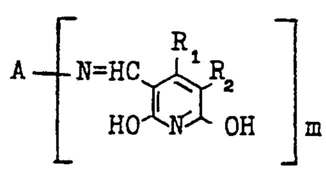

(I)

in which
A denotes an anthraquinone radical which is free from sulphonic acid groups, is optionally further substituted and preferably consists of at most 5 fused rings,
m is a number from 1—4 and preferably 1 or 2,
$R_1$ is hydrogen or a $C_1$—$C_4$-alkyl group and

$R_2$ is a cyano group or a radical of the formula

$—COOR_3$ (II) or 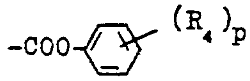 (III)

or a radical of the formula

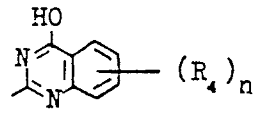 (IV)

in which formulae

$R_3$ is hydrogen, a straight-chain or branched alkyl group or a cycloalkyl radical,

$R_4$ is a substituent,

n is 0, 1, 2, 3 or 4 and

p is 0, 1, 2, 3, 4 or 5.

2. Anthraquinone derivatives which in one of their tautomeric structures correspond to the formula

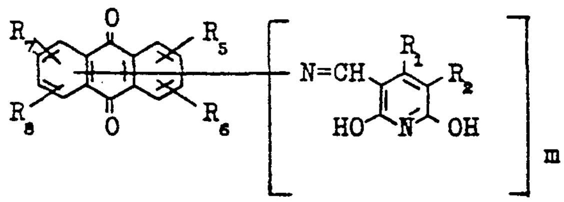 (VI)

in which

$R_1$, $R_2$ and m have the meaning indicated in Claim 1 and

$R_5$ denotes hydrogen, halogen such as fluorine, chlorine and bromine, nitro, $C_1$—$C_4$-alkyl, $C_1$—$C_4$-alkoxy, $C_1$—$C_4$-alkylamino, benzylamino, cyclohexylamino, $C_1$—$C_4$-alkylmercapto, phenylmercapto which is optionally substituted by $C_1$—$C_4$-alkyl, $C_1$—$C_4$-alkoxy, fluorine, chlorine, bromine or nitro, ($C_1$—$C_4$-alkyl)-carbonyl, ($C_1$—$C_4$-alkoxy)-carbonyl, phenylamino which is optionally substituted by $C_1$—$C_4$-alkyl, $C_1$—$C_4$-alkoxy, chlorine or nitro, carboxamide which is optionally monosubstituted or disubstituted by $C_1$—$C_4$-alkyl, benzyl or phenyl, it being possible for phenyl to be substituted by $C_1$—$C_4$-alkyl, $C_1$—$C_4$-alkoxy, fluorine, chlorine, bromine or nitro, carboxyl, hydroxyl, ($C_1$—$C_4$-alkyl)-carbonylamino or benzoylamino which is optionally substituted by $C_1$—$C_4$-alkyl, $C_1$—$C_4$-alkoxy, chlorine, bromine or nitro, . . phenylsulphonylamino . . substituted . . $C_1$—$C_4$-alkyl, $C_1$—$C_4$-alkoxy, fluorine, chlorine, bromine or nitro,

$R_6$ is hydrogen, chlorine or hydroxyl,

$R_7$ is hydrogen, halogen, such as fluorine, chlorine or bromine, nitro, $C_1$—$C_4$-alkyl, $C_1$—$C_4$-alkoxy, $C_1$—$C_4$-alkylamino, $C_1$—$C_4$-alkylmercapto, phenylmercapto which is optionally substituted by $C_1$—$C_4$-alkyl, $C_1$—$C_4$-alkoxy, fluorine, chlorine, bromine or nitro, ($C_1$—$C_4$-alkoxy)-carbonyl, ($C_1$—$C_4$-alkyl)-carbonyl, benzylamino, cyclohexylamino phenylamino which is optionally substituted by $C_1$—$C_4$-alkyl, $C_1$—$C_4$-alkoxy, chlorine, bromine or nitro, carboxyl, hydroxyl, carbamoyl which is optionally monosubstituted or disubstituted by $C_1$—$C_4$-alkyl, benzyl or phenyl, it being possible for phenyl to be substituted by $C_1$—$C_4$-alkyl, $C_1$—$C_4$-alkoxy, fluorine, chlorine, bromine or nitro, ($C_1$—$C_4$-alkyl)-carbonylamino, benzoylamino which is optionally substituted by $C_1$—$C_4$-alkyl, $C_1$—$C_4$-alkoxy, chlorine, bromine or nitro, $C_1$—$C_4$-alkylsulphonylamino or phenylsulphonylamino which is optionally substituted by $C_1$—$C_4$-alkyl, $C_1$—$C_4$-alkoxy, fluorine, chlorine, bromine or nitro, and

$R_8$ is hydrogen, halogen, such as fluorine, chlorine and bromine, or hydroxyl.

3. Anthraquinone derivatives which in one of their tautomeric structures correspond to the formula

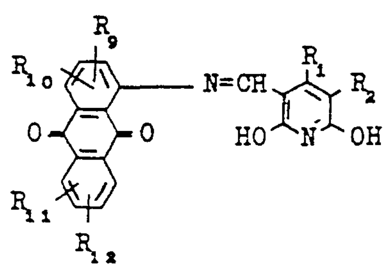 (VII)

in which

$R_1$ and $R_2$ have the meaning indicated in Claim 1 and

$R_9$, $R_{10}$ $R_{11}$ and $R_{12}$ denote hydrogen, chlorine, bromine, carboxyl, $C_1$—$C_4$-alkoxycarbonyl, carbamoyl, ($C_1$—$C_4$-alkyl)-carbonylamino, benzoylamino which is optionally substitued by 1 or 2 nitro or 1 to 5 chlorines or bromines, $C_1$—$C_4$-alkylsulphonylamino or phenylsulphonylamino which is optionally substituted by methyl, methoxy or chlorine, or a radical of the formula

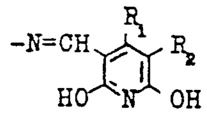

(VIII)

4. Process for the preparation of anthraquinone pigments, characterised in that amino-anthraquinones of the formula

$$A\text{-}\!\!\!+\!(NH_2)_m \qquad (V)$$

in which
A and m have the meaning indicated in Claim 1,
are subjected to a condensation reaction with 2-hydroxy-5-alkoxymethylene-6-oxo-5,6-dihydropyridines of the formula

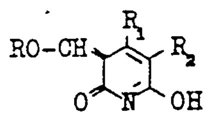

(XI)

in which
R preferably represents a $C_1$—$C_4$-alkyl group and
$R_1$ and $R_2$ have the meaning indicated in Claim 1,
in an organic reaction medium at 100—220°C and preferably 120—180°C.

5. Process for the preparation of anthraquinone pigments, characterised in that formimino-esters of amino-anthraquinones of the formula

$$A\text{-}\!\!\!+\!(N{=}CH{-}OR)_m \qquad (XII)$$

in which
A and m have the meaning indicated in Claim 1 and
R preferably represents a $C_1$—$C_4$-alkyl group,
are subjected to a condensation reaction with 2,6-dihydroxy-pyridines of the formula

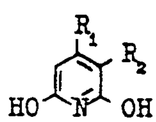

(IX)

in which
$R_1$ and $R_2$ have the meaning indicated in Claim 1,
in an organic reaction medium at 100—220°C and preferably 120—180°C.

6. Process for the preparation of anthraquinone pigments, characterised in that formamidinium halides of the formula

$$A\text{-}\!\!\!+\![NH{-}CH{=}\overset{\oplus}{N}(R)_2]_m \quad (X^-)_m \qquad (XIII)$$

in which
A and m have the meaning indicated in Claim 1 and
R preferably represents a $C_1$—$C_4$-alkyl group,
and X represents chlorine or bromine,
are subjected to a condensation reaction with 2,6-dihydroxypyridines of the formula

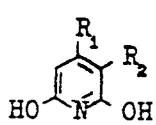

(IX)

in which
$R_1$ and $R_2$ have the meaning indicated in Claim 1,
in an organic solvent at 100—220°C and preferably 120—180°C, in the presence of an acid-binding agent.

7. Process for pigmenting organic macromolecular substances, characterised in that anthraquinone derivatives according to Claims 1 to 3 are used.

## Revendications

1. Dérivés d'anthraquinone qui, dans une de leurs structures tautomères, correspondent à la formule

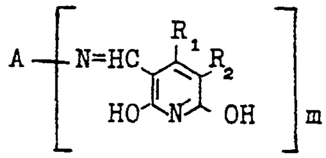 (I)

dans laquelle

A représente un reste anthraquinone exempt de groupes acide sulfonique, éventuellement encore substitué, qui consiste de préférence en au plus 5 noyaux condensés,

m est un nombre de 1—4, de préférence 1 ou 2,

$R_1$ représente l'hydrogène ou un groupe alkyle en $C_1$—$C_4$,

$R_2$ représente un groupe cyano, un reste de formule

$—COOR_3$ (II) ou 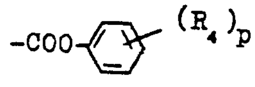 (III)

ou un reste de formule

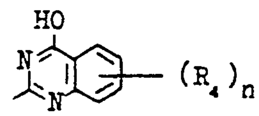 (IV)

dans laquelle

$R_3$ représente l'hydrogène ou un groupe alkyle à chaîne droite ou ramifiée, ou un reste cycloalkyle,

$R_4$ représente un substituant,

n représente 0, 1, 2, 3 ou 4 et

p représente 0, 1, 2, 3, 4 ou 5.

2. Dérivés d'anthraquinone qui, dans une de leurs structures tautomères, correspondent à la formule

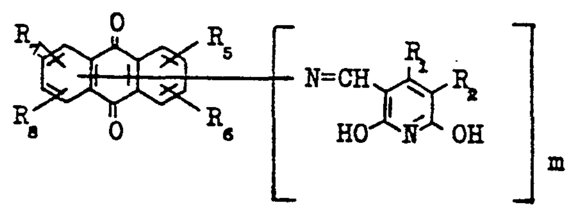 (VI)

dans laquelle

$R_1$, $R_2$ et m ont la signification indiquée à la revendication 1 et

$R_5$ représente l'hydrogène, un halogène tel que fluor, chlore et brome, un reste nitro, alkyle en $C_1$—$C_4$, alcoxy en $C_1$—$C_4$, alkylamino en $C_1$—$C_4$, benzylamino, cyclohexylamino, alkylmercapto en $C_1$—$C_4$, phénylmercapto éventuellement substitué par alkyle en $C_1$—$C_4$, alcoxy en $C_1$—$C_4$, fluoro, chloro, bromo ou nitro, (alkyl en $C_1$—$C_4$)-carboxyle, (alcoxy en $C_1$—$C_4$)carbonyle, phénylamino éventuellement substitué par alkyle en $C_1$—$C_4$, alcoxy en $C_1$—$C_4$, chloro ou nitro, carbonamide éventuellement mono- ou disubstitué par alkyle en $C_1$—$C_4$, benzyle ou phényle, le phényle pouvant être substitué par alkyle en $C_1$—$C_4$, alcoxy en $C_1$—$C_4$, fluoro, chloro, bromo ou nitro, carboxy, hydroxy, (alkyl en $C_1$—$C_4$)carbonylamino ou benzoylamino éventuellement substitué par alkyle en $C_1$—$C_4$, alcoxy en $C_1$—$C_4$, chloro, bromo ou nitro, phénylsulfonylamino substitué par alkyle en $C_1$—$C_4$, alcoxy en $C_1$—$C_4$, fluoro, chloro, bromo ou nitro,

$R_6$ représente l'hydrogène ou un reste chloro ou hydroxy,

$R_7$ représente l'hydrogène, un halogène tel que fluor, chlore ou brome, un reste nitro, alkyle en $C_1$—$C_4$, alcoxy en $C_1$—$C_4$, alkylamino en $C_1$—$C_4$, alkylmercapto en $C_2$—$C_4$, phénylmercapto éventuellement substitué par alkyle en $C_1$—$C_4$, alcoxy en $C_1$—$C_4$, fluoro, chloro, bromo ou nitro, (alcoxy en $C_1$—$C_4$)carbonyle, (alkyl en $C_1$—$C_4$)carbonyle, benzylamino, cyclohexylamino, phénylamino éventuellement substitué par alkyle en $C_1$—$C_4$, alcoxy en $C_1$—$C_4$, chloro, bromo ou nitro, carboxy, hydroxy, carbamoyle éventuellement mono- ou disubstitué par alkyle en $C_1$—$C_4$, benzyle ou phényle, le phényle pouvant être substitué par alkyle en $C_1$—$C_4$, alcoxy en $C_1$—$C_4$, fluoro, chloro, bromo ou nitro, (alkyl en $C_1$—$C_4$)carbonylamino, benzoylamino éventuellement substitué par alkyle en $C_1$—$C_4$, alcoxy en $C_1$—$C_4$, chloro, bromo ou nitro, alkylsulfonylamino en $C_1$—$C_4$ ou phénylsulfonylamino éventuellement substitué par alkyle en $C_1$—$C_4$, alcoxy en $C_1$—$C_4$, fluoro, chloro, bromo ou nitro, et

$R_8$ représente l'hydrogène, un halogène tel que fluor, chlore et brome ou un hydroxy.

3. Dérivés d'anthraquinone qui, dans une de leurs structures tautomères, correspondent à la formule

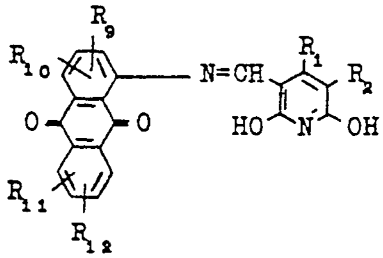

(VII)

dans laquelle

$R_1$ et $R_2$ ont la signification indiquée dans la revendication 1 et

$R_9$, $R_{10}$, $R_{11}$ et $R_{12}$ représentent l'hydrogène, le chlore, le brome, un reste carboxy, (alcoxy en $C_1$—$C_4$)-carbonyle, carbamoyle, (alkyl en $C_1$—$C_4$)carbonylamino, benzoylamino éventuellement substitué par 1 ou 2 nitro ou 1 à 5 chloro ou bromo, alkylsulfonylamino en $C_1$—$C_4$ ou phénylsulfonylamino éventuellement substitué par méthyle, méthoxy ou chloro ou un reste de formule

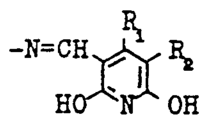

(VIII)

4. Procédé pour la préparation de pigments d'anthraquinone, caractérisé en ce que l'on condense des amino-anthraquinones de formule

$$A\text{—}(NH_2)_m \qquad (V)$$

dans laquelle A et m possèdent la signification indiquée à la revendication 1, avec des 2-hydroxy-5-alcoxyméthylène-6-oxo-5,6-dihydropyridines de formule

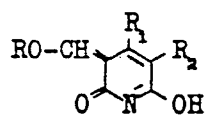

(XI)

dans laquelle R représente de préférence un groupe alkyle en $C_1$—$C_4$ et $R_1$ et $R_2$ ont la signification indiquée à la revendication 1, dans un milieu de réaction organique à 100—220°C, de préférence 120—180°C.

5. Procédé pour la préparation de pigments d'anthraquinone, caractérisé en ce que l'on condense des formiminoesters d'aminoanthraquinones de formule

$$A\text{—}(N{=}CH\text{—}OR)_m \qquad (XII)$$

dans laquelle A et m ont la signification indiquée à la revendication 1 et R représente de préférence un groupe alkyle en $C_1$—$C_4$,

avec des 2,6-dihydroxy-pyridines de formule

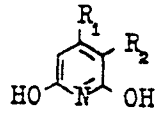

(IX)

dans laquelle $R_1$ et $R_2$ ont la signification indiquée à la revendication 1, dans un milieu de réaction organique à 100—220°C, de préférence 120—180°C.

6. Procédé pour la préparation de pigments d'anthraquinone, caractérisé en ce que l'on condense des halogénures de formamidinium de formule

$$A\text{—}[NH\text{—}CH{=}\overset{\oplus}{N}(R)_2]_m(X^-)_m \qquad (XIII)$$

dans laquelle

A et m ont la signification indiquée à la revendication 1,

R représente de préférence un groupe alkyle en $C_1$—$C_4$ et
X le chlore ou le brome,
avec des 2,6-dihydroxypyridines de formule

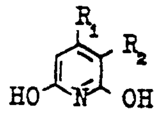

(IX)

dans laquelle
$R_1$ et $R_2$ ont la signification indiquée à la revendication 1, dans un solvant organique à 100—220°C, de préférence 120—180°C, en présence d'un agent accepteur d'acide.

7. Procédé pour la pigmentation de substances organiques de poids moléculaire élevé, caractérisé en ce que l'on utilise des dérivés d'anthraquinone selon les revendications 1 à 3.